# EUROPÄISCHE PATENTSCHRIFT

(11) **EP 3 526 890 B1**
(45) Veröffentlichungstag und Bekanntmachung des Hinweises auf die Patenterteilung: **26.01.2022**
(21) Anmeldenummer: 17778261.2
(22) Anmeldetag: 02.10.2017
(51) Int. Cl.: H02M 3/157, H02M 1/00

(54) **REGELVORRICHTUNG FÜR EINEN GLEICHSPANNUNGSWANDLER, GLEICHSPANNUNGSWANDLER UND VERFAHREN ZUR REGELUNG EINES GLEICHSPANNUNGSWANDLERS**
CONTROL DEVICE FOR A DC/DC CONVERTER, DC/DC CONVERTER AND METHOD FOR CONTROLLING A DC/DC CONVERTER
DISPOSITIF DE COMMANDE POUR UN CONVERTISSEUR CONTINU-CONTINU, CONVERTISSEUR CONTINU-CONTINU, ET PROCÉDÉ DE COMMANDE D'UN CONVERTISSEUR CONTINU-CONTINU

(30) Priorität: 11.10.2016 DE 102016219742
(43) Veröffentlichungstag der Anmeldung: 21.08.2019
(73) Patentinhaber: Robert Bosch GmbH, 70442 Stuttgart (DE)
(72) Erfinder: ESTEGHLAL, Gholamabas, 70499 Stuttgart-Weilimdorf (DE)
(86) Internationale Anmeldenummer: PCT/EP2017/074942
(87) Internationale Veröffentlichungsnummer: WO 2018/069077

(56) Entgegenhaltungen:
- EP-A1- 2 244 369
- EP-A1- 2 722 726
- US-A1- 2007 247 129
- US-A1- 2009 167 228
- US-A1- 2013 234 690
- US-A1- 2014 028 383

## Beschreibung

Die vorliegende Erfindung betrifft eine Regelvorrichtung für einen Gleichspannungswandler sowie einen Gleichspannungswandler mit einer solchen Regelvorrichtung. Ferner betrifft die vorliegende Erfindung ein Verfahren zur Regelung eines Gleichspannungswandlers.

### Stand der Technik

Gleichspannungswandler werden in zahlreichen Anwendungsgebieten eingesetzt. Sie konvertieren eine eingangsseitig bereitgestellte Gleichspannung in eine Ausgangsspannung, wobei die Ausgangsspannung in der Regel eine von der Eingangsspannung verschiedene Spannungshöhe aufweist. Die Ausgangsspannung kann dabei größer oder geringer sein als die Eingangsspannung.

Insbesondere kann beispielsweise in einem Elektro- oder Hybridfahrzeug ein Hochvolt-Bordnetz mit einer Spannung von mehreren hundert Volt mittels eines Gleichspannungswandlers mit einem Niedervolt-Bordnetz mit einer Spannung von 12 Volt oder gegebenenfalls 24 Volt elektrisch gekoppelt werden. Auf diese Weise ist ein Energieaustausch zwischen dem Hochvolt-Bordnetz und dem Niedervolt-Bordnetz des Fahrzeugs möglich.

Die Druckschrift US 2007/0247129 A1 offenbart eine Regelung eines Spannungswandlers mit einem Ausgangsfilter, wobei eine Eingangsspannung geschätzt wird. Die Druckschrift US 2013/0234690 A1 offenbart eine Stromversorgung mit einem geregelten Spannungswandler, wobei eine Eingangsspannung geschätzt wird. Die Druckschrift EP 2 722 726 A1 offenbart eine Regelung einer Leistungskurve einer Photovoltaikanlage. Die Druckschrift US 2014/0028383 A1 offenbart eine geregelte Spannungsversorgung. Die Druckschrift EP 2 244 369 A1 offenbart einen Spannungswandler mit einer Schätzung einer Gleichspannung. Die Druckschrift US 2009/0167228 A1 offenbart eine Lüfterdrehzahlregelung mit einer Schätzung einer Spannung. Die Druckschrift DE 10 2007 038 587 A1 offenbart ein Verfahren zum Betreiben eines Gleichstrom-Spannungswandlers in einem Hybridfahrzeug. Im Rahmen eines solchen Verfahrens erfolgt die Ansteuerung des Gleichstrom-Spannungswandlers in Abhängigkeit vom Fahrzustand des Fahrzeugs und/oder der Spannung eines der Bordnetze.

### Offenbarung der Erfindung

Die vorliegende Erfindung offenbart eine Regelvorrichtung für einen Gleichspannungswandler gemäß Patentanspruch 1, einen Gleichspannungswandler gemäß Patentanspruch 7 und ein Verfahren zur Regelung eines Gleichspannungswandlers gemäß Patentanspruch 8.

Demgemäß ist vorgesehen:
Eine Regelvorrichtung für einen Gleichspannungswandler mit einer Recheneinrichtung und einer Steuereinrichtung. Die Recheneinrichtung der Regelvorrichtung ist dazu ausgelegt, einen Schätzwert für eine Eingangsspannung des Gleichspannungswandlers zu berechnen. Die Steuereinrichtung ist dazu ausgelegt, basierend auf dem berechneten Schätzwert für die Eingangsspannung des Gleichspannungswandlers eine Regelgröße für den Gleichspannungswandler zu ermitteln. Die ermittelte Regelgröße kann daraufhin dem Gleichspannungswandler bereitgestellt werden. Weiterhin ist vorgesehen:
Ein Gleichspannungswandler zur Konvertierung einer Eingangsspannung in eine Ausgangsspannung mit einer erfindungsgemäßen Regelvorrichtung. Der Gleichspannungswandler kann ferner einen Gleichspannungskonverter umfassen. Die Regelgröße der Regelvorrichtung kann zur Steuerung des Gleichspannungskonverters an dem Gleichspannungskonverter bereitgestellt werden.

Ferner ist vorgesehen:
Ein Verfahren zur Regelung eines Gleichspannungswandlers mit den Schritten des Berechnens eines Schätzwertes für eine Eingangsspannung des Gleichspannungswandlers und des Ermittelns einer Regelgröße für den Gleichspannungswandler basierend auf dem berechneten Schätzwert der Eingangsspannung.

### Vorteile der Erfindung

Der vorliegenden Erfindung liegt die Erkenntnis zugrunde, dass es sich bei der Eingangsspannung eines Gleichspannungswandlers gegebenenfalls nicht um eine ideale Gleichspannung einer konstanten, vorbestimmten Höhe handelt, sondern dass die Eingangsspannung im realen Betrieb mit verschiedenen Störungen, wie zum Beispiel einem Rippel oder ähnlichem beaufschlagt sein kann. Um auch in einem solchen Fall, also bei einer Eingangsspannung mit einer überlagerten Störung, eine konstante Ausgangsspannung bereitstellen zu können, müssen die Störungen in der Eingangsspannung durch eine Regelung in dem Gleichspannungswandler kompensiert werden. Eine Regelung, welche Variationen in der Ausgangsspannung eines Gleichspannungswandlers kompensiert, weist in der Regel eine endliche Verzögerung auf. Daher werden Störungen in der Eingangsspannung durch die Regelung auch nur mit einer Verzögerung kompensiert.

Es ist daher eine Idee der vorliegenden Erfindung, dieser Erkenntnis Rechnung zu tragen und eine Regelung für einen Gleichspannungswandler vorzusehen, welche eine möglichst konstante Ausgangsspannung bei einer störbehafteten Eingangsspannung ermöglicht. Hierzu ist es vorgesehen, Variationen, insbesondere Störungen, in der Eingangsspannung vorab zu schätzen und daraufhin diesen Schätzwert für die störbehaftete Eingangsspannung in eine Regelung für den Gleichspannungswandler mit einzubeziehen. Dabei können insbesondere periodische Störungen, wie zum Beispiel ein Rippel oder ähnliches sehr gut abgeschätzt werden. In der Folge kann für derartige Störungen basierend auf einem Schätzwert für die Eingangsspannung eine Regelgröße bestimmt werden, welche die Störungen auf der Eingangsspannung kompensieren kann. Da die Berechnung dieser Schätzwerte für die gestörte Eingangsspannung im Voraus bzw. in Echtzeit erfolgen kann, kann zu jedem Zeitpunkt ein geeigneter Schätzwert für die Eingangsspannung zur Regelung des Gleichspannungswandlers bereitgestellt werden. Auf diese Weise kann eine Regelgröße generiert werden, welche mit einer sehr großen Wahrscheinlichkeit die eingangsseitig am Gleichspannungswandler anliegenden Störungen in der Eingangsspannung kompensieren kann. Hierdurch kann die Ausgangsspannung des Gleichspannungswandlers zumindest annähernd konstant gehalten werden.

Gemäß einer Ausführungsform ist die Recheneinrichtung der Regelvorrichtung dazu ausgelegt, den Schätzwert für die Eingangsspannung basierend auf einem Polynom zu berechnen. Insbesondere kann die Recheneinrichtung den Schätzwert für die Eingangsspannung basierend auf einem Polynom mit einem vorbestimmten Grad berechnen. In jedem Term des Polynoms kann ein Wert der Eingangsspannung oder ein Wert einer zeitlich verzögerten Eingangsspannung mit einem zuvor ermittelten Faktor multipliziert werden. Die Berechnung von Spannungswerten basierend auf Polynomen kann sehr einfach ausgeführt werden. Hiermit ist eine Ermittlung der Schätzwerte für die Eingangsspannung mittels einer einfachen und somit kostengünstigen Hardware möglich. Darüber hinaus können die Koeffizienten für ein solches Polynom zur Berechnung der Schätzwerte für die Eingangsspannung sehr einfach bestimmt werden.

Gemäß einer Ausführungsform ist die Recheneinrichtung dazu ausgelegt, den vorbestimmten Grad des Polynoms zur Berechnung des Schätzwertes für die Eingangsspannung in Abhängigkeit von einer elektrischen Belastung des Gleichspannungswandlers einzustellen. Insbesondere kann der Grad des Polynoms beispielsweise in Abhängigkeit von einer abgegebenen elektrischen Leistung des Gleichspannungswandlers, eines elektrischen Stroms am Eingang oder Ausgang des Gleichspannungswandlers, einer elektrischen Spannung am Eingang oder Ausgang des Gleichspannungswandlers oder einer Spannungsmessung oder einer Temperaturmessung in dem Gleichspannungswandler eingestellt werden. Auf diese Weise kann eine effiziente und gleichzeitig präzise Bestimmung von Schätzwerten für die Eingangsspannung implementiert werden. Beispielsweise kann der Grad des Polynoms für die Berechnung des Schätzwertes der Eingangsspannung zwischen 1 und 4 variiert werden. Die Abhängigkeit zwischen elektrischer Belastung des Gleichspannungswandlers und einzustellendem Grad des Polynoms kann zum Beispiel basierend auf zuvor bestimmten Vorgaben zwischen dem Grad und der elektrischen Belastung eingestellt werden.

Gemäß einer Ausführungsform ist die Recheneinrichtung dazu ausgelegt, das Polynom für die Berechnung des Schätzwertes für die Eingangsspannung in Abhängigkeit von einer Ausgangsspannung des Gleichspannungswandlers anzupassen. Insbesondere können die Koeffizienten des Polynoms zur Berechnung des Schätzwertes für die Eingangsspannung basierend auf Messwerten der Ausgangsspannung oder einem Verlauf der Ausgangsspannung bestimmt werden. Hierzu können insbesondere beliebige konventionelle oder neuartige Verfahren zur Ermittlung der Koeffizienten eingesetzt werden.

Gemäß einer Ausführungsform umfasst der Schätzwert für die Eingangsspannung ein Wechselspannungsoffset. Insbesondere kann der Schätzwert für die Eingangsspannung beispielsweise eine Eingangsspannung mit einem sogenannten Rippel oder ähnlichem umfassen. Derartige Störungen, wie beispielsweise ein Rippel, treten beispielsweise sehr häufig in Spannungsversorgungen für elektrische Antriebssysteme mit einem Stromrichter auf. Insbesondere periodische Signale, wie ein Wechselspannungsoffset oder ähnliches, können sehr gut vorab abgeschätzt werden. Daher kann für solche Anwendungsfälle eine sehr gute Kompensation von Störungen in der Eingangsspannung eines Gleichspannungswandlers durchgeführt werden.

Gemäß einer Ausführungsform ist die Recheneinrichtung dazu ausgelegt, eine Amplitude des Wechselspannungsoffsets auf einen vorbestimmten Wert zu begrenzen. Auf diese Weise kann die Regelung für den Gleichspannungswandler stabilisiert werden. Beispielsweise kann die Amplitude für ein Wechselspannungsoffset in der Eingangsspannung auf einen Wert von 30 Volt, 20 Volt, 15 Volt, 10 Volt oder 5 Volt begrenzt werden.

Gemäß einer Ausführungsform ist die Recheneinrichtung dazu ausgelegt, die Frequenz des Wechselspannungsoffsets für den Schätzwert der Eingangsspannung auf eine vorbestimmte Frequenz zu begrenzen. Störanteile mit höheren Frequenzen können in der Regel durch alternative Maßnahmen, wie beispielsweise ein Frequenzfilter, einen Filterkondensator oder ähnliches sehr gut kompensiert werden. Dabei könne jedoch auch beim Auftreten von höherfrequenten Störungen weiterhin Störanteile in der Eingangsspannung mit einer Frequenz unterhalb eines vorgegebenen Grenzwertes, wie beispielsweise 10 kHz, abgeschätzt und kompensiert werden.

Gemäß einer Ausführungsform umfasst die Regelgröße, welche von der Steuereinrichtung ermittelt wird, ein Tastverhältnis, einen Phasenwinkel oder einen weiteren Parameter zur Ansteuerung von Schaltelementen in dem Gleichspannungswandler. Insbesondere kann bei einem Gleichspannungswandler, welcher auf Basis einer Pulsbreitenmodulation arbeitet, durch die Ermittlung der Regelgröße in der Steuereinrichtung das erforderliche Tastverhältnis eingestellt werden.

Die obigen Ausgestaltungen und Weiterbildungen lassen sich, so weit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:
- Figur 1:: eine schematische Darstellung eines Gleichspannungswandlers mit einer Regelvorrichtung gemäß einer Ausführungsform;
- Figur 2:: eine schematische Darstellung für die Berechnung eines Schätzwertes der Eingangsspannung in einer Recheneinrichtung, wie sie einer Ausführungsform zugrunde liegt; und
- Figur 3:: eine schematische Darstellung eines Ablaufdiagramms, wie es einem Verfahren zur Regelung eines Gleichspannungswandlers gemäß einer Ausführungsform zugrunde liegt.

### Ausführungsformen der Erfindung

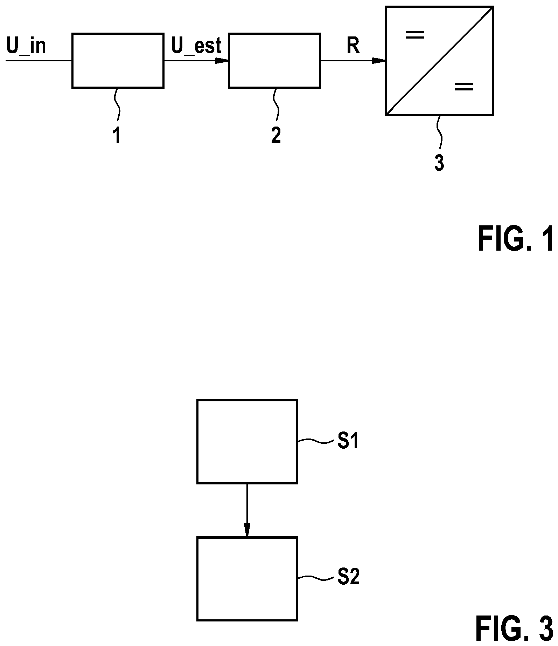

Figur 1 zeigt eine schematische Darstellung eines Gleichspannungswandlers zur Konvertierung einer Eingangsspannung in eine Ausgangsspannung. Der Gleichspannungswandler umfasst einen Gleichspannungskonverter 3, an dem eingangsseitig die Eingangsspannung bereitgestellt wird. Daraufhin konvertiert der Gleichspannungswandler 3 die Eingangsspannung basierend auf einer Regelgröße R in eine Ausgangsspannung. Die Regelgröße R kann dabei mittels einer Steuereinrichtung 2 unter Verwendung verschiedener Parameter ermittelt werden. Insbesondere kann die Steuereinrichtung 2 die Regelgröße R für den Gleichspannungskonverter 3 auf Grundlage einer vorgegebenen Soll-Ausgangsspannung U_des ermitteln. Ferner kann die Steuereinrichtung zur Ermittlung der Regelgröße eine (theoretische) Eingangsspannung des Gleichspannungswandlers berücksichtigen. Weitere Parameter, wie beispielsweise eine ausgangsseitige Belastung des Gleichspannungswandlers, eine abgegebene Leistung oder ein Strom am Ausgang des Gleichspannungswandlers können ebenfalls berücksichtigt werden. Gegebenenfalls ist es auch möglich, die Regelgröße R mittels Kombination mehrerer individuell ermittelter Teil-Regelgrößen zu ermitteln. Beispielsweise kann eine erste Regelgröße unter Verwendung der Soll-Ausgangsspannung U_des und der (theoretischen) Eingangsspannung U_in berechnet werden. Eine weitere Regelgröße kann darüber hinaus mittels einer separaten Einrichtung unter Verwendung der aktuellen Ausgangsspannung sowie gegebenenfalls weiterer Parameter berechnet werden. In diesem Fall können die einzelnen Regelgrößen kombiniert, beispielsweise addiert werden, um zu einer Gesamtregelgröße R zur Ansteuerung des Gleichspannungskonverters 3 zu gelangen.

Variiert die Eingangsspannung U_in des Gleichspannungswandlers, so wird sich diese Variation in der Regel zunächst auch auf die von dem Gleichspannungswandler abgegebene Ausgangsspannung auswirken. Die Variation der Ausgangsspannung kann daraufhin gegebenenfalls erfasst werden und anschließend die Regelgröße R zur Ansteuerung des Gleichspannungskonverters 3 entsprechend angepasst werden. In diesem Fall kann jedoch eine Korrektur der Regelgröße R erst dann erfolgen, wenn zuvor eine Abweichung der Ausgangsspannung von einem vorgegebenen Soll-Wert festgestellt worden ist. Daher werden sich in einem konventionellen Gleichspannungswandler Variationen in der Eingangsspannung U_in in der Regel zumindest kurzzeitig auch am Ausgang des Gleichspannungswandlers bemerkbar machen. Insbesondere bei höheren Eingangsspannungen ist in der Regel eine direkte Erfassung der Eingangsspannung aus Sicherheitsgründen nicht oder nur mit sehr hohem Aufwand möglich. Daher liegt in zahlreichen Anwendungsfällen keine direkte Information über die Eingangsspannung U_in vor.

Ist die Eingangsspannung U_in mit einer Störung beaufschlagt, so wird sich daher diese Störung auch an der Ausgangsspannung des Spannungswandlers bemerkbar machen. In zahlreichen Anwendungsfällen kann jedoch ein zeitlicher Verlauf einer mit einer Störung beaufschlagten Eingangsspannung zumindest annäherungsweise abgeschätzt werden. Insbesondere wenn die Eingangsspannung mit einer periodischen Störung beaufschlagt ist, so kann diese periodische Störung bestimmt werden. Auf Grundlage dieser ermittelten Störung in der Eingangsspannung kann daraufhin die Regelgröße R entsprechend angepasst werden.

Handelt es sich bei der Eingangsspannung des Gleichspannungswandlers beispielsweise um eine Spannung aus einem Hochvoltnetz eines Elektro- oder Hybridfahrzeugs, so kann diese Eingangsspannung aufgrund eines elektrischen Stromrichters in dem Antriebssystem des Fahrzeugs mit einem sogenannten Rippel beaufschlagt sein. Die Frequenz bzw. die Frequenzkomponenten des Rippels hängen dabei unter anderem von der jeweiligen Taktfrequenz des Stromrichters in dem Antriebssystem des Elektro- oder Hybridfahrzeugs ab. In der Regel können hierbei Spannungsschwankungen mit einer Amplitude von bis zu 30 Volt oder mehr auftreten.

Zur Kompensation von Störungen bzw. Spannungsschwankungen in der Eingangsspannung kann die Recheneinrichtung 1 des Gleichspannungswandlers einen Schätzwert für die Eingangsspannung des Gleichspannungswandlers berechnen. Dieser Schätzwert für die Eingangsspannung kann beispielsweise auf Grundlage von zuvor detektierten Spannungsschwankungen in der Ausgangsspannung des Gleichspannungswandlers ermittelt werden. Insbesondere wenn in der Ausgangsspannung des Spannungswandlers eine periodische Schwankung detektiert worden ist, so kann dies als Hinweis auf eine periodische Störung in der Eingangsspannung des Gleichspannungswandlers gedeutet werden. Entsprechend kann der weitere Verlauf der Eingangsspannung auf Grundlage von zuvor ermittelten Schwankungen in der Ausgangsspannung des Gleichspannungswandlers abgeschätzt werden.

Die Recheneinrichtung 1 kann beispielsweise zu einem an der Recheneinrichtung 1 bereitgestellten Wert für die Eingangsspannung U_in einen berechneten Korrekturwert hinzuaddieren oder subtrahieren. Dieser Korrekturwert kann insbesondere auf Grundlage von zuvor ermittelten Schwankungen in der Ausgangsspannung des Gleichspannungswandlers bestimmt werden.

Insbesondere kann eine Abschätzung für einen Korrekturwert der Eingangsspannung des Gleichspannungswandlers auf Grundlage eines Polynoms berechnet werden. Insbesondere kann hierzu beispielsweise eine Lagrange-Entwicklung für das Polynom verwendet werden, welches die Grundlage zur Berechnung der Schätzwerte für die Eingangsspannung liefert. Die Bestimmung der Koeffizienten für ein Lagrange-Polynom ist allgemein bekannt und wird daher im Folgenden nicht näher erläutert. Darüber hinaus sind grundsätzlich auch beliebige weitere Verfahren zur Abschätzung der Eingangsspannung des Gleichspannungswandlers möglich.

Soll die Berechnung des Schätzwertes für die Eingangsspannung basierend auf einem Polynom erfolgen, so kann hierzu bereits vorab ein maximaler Grad für dieses Polynom festgelegt werden. Insbesondere sind beispielsweise Lagrange-Entwicklungen mit einem Polynom bis zum vierten Grad geeignet. Darüber hinaus können gegebenenfalls jedoch auch Polynome mit einem höheren Grad verwendet werden. Insbesondere ist es auch möglich, den Grad des Polynoms zur Bestimmung des Schätzwertes für die Eingangsspannung dynamisch anzupassen.

Beispielsweise ist es möglich, den Grad des Polynoms zur Abschätzung der Eingangsspannung U_in in Abhängigkeit von einer Belastung des Gleichspannungswandlers anzupassen. Die Belastung des Gleichspannungswandlers kann beispielsweise basierend auf einer abgegebenen elektrischen Leistung, einem elektrischen Strom und/oder einer elektrischen Spannung in dem Gleichspannungswandler ermittelt werden. Insbesondere ist es möglich, mit steigender Belastung des Gleichspannungswandlers den Grad des Polynoms zur Bestimmung des Schätzwertes U_est der Eingangsspannung zu verringern. Beispielsweise kann bei einer geringen elektrischen Belastung des Gleichspannungswandlers ein Polynom vierten Grades zur Berechnung des Schätzwertes U_est verwendet werden. Mit steigender Belastung kann dieser Grad des Polynoms abgesenkt werden und beim Erreichen einer vorgegebenen Leistung kann der Grad des Polynoms gegebenenfalls auch nur Eins betragen. Der Zusammenhang zwischen der elektrischen Belastung des Gleichspannungswandlers und dem jeweils verwendeten Grad des Polynoms zur Berechnung des Schätzwertes U_est der Eingangsspannung kann dabei gegebenenfalls vorab festgelegt und in der Recheneinrichtung 1 abgespeichert sein. Soll der Grad des Polynoms verringert werden, so können hierzu beispielsweise die Koeffizienten der höheren Grade zu Null gesetzt werden.

Die Bestimmung der Koeffizienten für das Polynom zur Abschätzung der Eingangsspannung kann beispielsweise bei der Initialisierung bzw. bei dem Start des Gleichspannungswandlers ermittelt werden. Beispielsweise kann nach dem Start des Gleichspannungswandlers die Ausgangsspannung des Gleichspannungswandlers analysiert werden und hierbei können Variationen in der Ausgangsspannung identifiziert werden. Basierend auf diesen Variationen in der Ausgangsspannung können die Koeffizienten eines Polynoms zur Abschätzung der Eingangsspannung berechnet werden. Daraufhin kann ein Schätzwert U_est für die Eingangsspannung berechnet werden und basierend auf diesem Schätzwert U_est für die Eingangsspannung kann die Regelgröße R zur Steuerung des Gleichspannungskonverters 3 entsprechend angepasst werden. Wird daraufhin festgestellt, dass die Ausgangsspannung des Gleichspannungswandlers zumindest annähernd konstant bleibt, das heißt der Betrag der Abweichung der Ausgangsspannung unterhalb einem vorgegebenen Schwellwert bleibt, so können die ermittelten Koeffizienten für das Polynom zur Abschätzung der Eingangsspannung im weiteren Verlauf konstant gehalten werden.

Gegebenenfalls können die Koeffizienten für die Abschätzung der Eingangsspannung regelmäßig zu vorgegebenen Ereignissen erneut berechnet werden. Beispielsweise kann jeweils nach einer vorbestimmten Zeitspanne die Recheneinrichtung 1 zurückgesetzt werden. Hierzu werden zunächst alle Koeffizienten der Polynome beispielsweise auf Null gesetzt. Anschließend erfolgt eine Auswertung der Ausgangsspannung des Gleichspannungswandlers. Basierend auf den Variationen der Ausgangsspannung des Gleichspannungswandlers nach einem Zurücksetzen können daraufhin erneut geeignete Koeffizienten zur Abschätzung der Eingangsspannung ermittelt werden.

Ferner ist es auch möglich, die Koeffizienten zur Abschätzung der Eingangsspannung jeweils dann erneut zu bestimmen oder anzupassen, wenn die Ausgangsspannung des Gleichspannungswandlers um mehr als einen vorgegebenen Grenzwert von einem Sollwert der Ausgangsspannung abweicht. Weitere Kriterien und Ereignisse, welche ein erneutes Berechnen oder eine Korrektur der Koeffizienten für die Abschätzung der Eingangsspannung triggern, sind darüber hinaus ebenso möglich.

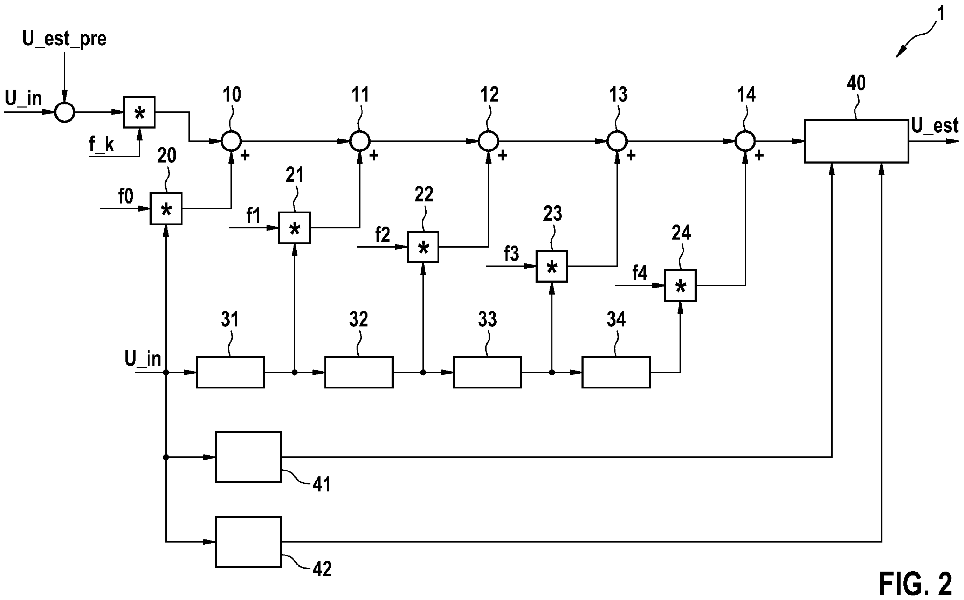

Figur 2 zeigt eine schematische Darstellung für eine Abschätzung der Eingangsspannung in einer Recheneinrichtung 1 gemäß einer Ausführungsform. Für eine Polynomentwicklung, beispielsweise ein Lagrange-Polynom vierten Grades werden zunächst die Korrekturfaktoren f0 bis f4 ermittelt und bereitgestellt. Soll für die Abschätzung der Eingangsspannung ein Polynom mit einem Grad von weniger als vier verwendet werden, so können beispielsweise die entsprechenden Koeffizienten zu Null gesetzt werden. Der Wert der Eingangsspannung U_in wird eingangsseitig bereitgestellt und durch die Verzögerungsglieder 31 bis 34 sukzessive verzögert. Der Wert der Eingangsspannung U_in bzw. die verzögerten Werte der Eingangsspannung U_in werden in den Multiplikationselementen 20 bis 24 mit den Koeffizienten f0 bis f4 multipliziert und die jeweiligen Produkte werden anschließend in den Summiergliedern 10 bis 14 zusammen mit einem vorläufigen Korrekturwert aufaddiert. Der vorläufige Korrekturwert gibt sich hierbei aus der Differenz zwischen der vorgegebenen Eingangsspannung U_in und dem vorherigen Schätzwert U_est_pre der Eingangsspannung. Gegebenenfalls kann diese Differenz mit einem weiteren Faktor f_k multipliziert werden.

Zusätzlich ist es noch möglich, gegebenenfalls in einer Maximumsbestimmungseinheit 41 einen Maximalwert für die abzuschätzende Eingangsspannung zu ermitteln. Analog kann in der Einheit 42 ein minimaler Wert für die abzuschätzende Eingangsspannung ermittelt werden. In diesem Fall kann in einer Begrenzungseinheit 40 der abgeschätzte Wert der Eingangsspannung auf diese Maximal- bzw. Minimalwerte begrenzt werden. Als Ausgang liefert die Recheneinheit 1 daraufhin einen Schätzwert U_est für die Eingangsspannung des Gleichspannungswandlers. Dieser Schätzwert U_est kann daraufhin in der Steuereinrichtung 2 für die Berechnung der Steuergröße R des Gleichspannungskonverters 3 verwendet werden.

Figur 3 zeigt eine schematische Darstellung eines Ablaufdiagramms, wie es einem Verfahren zur Regelung eines Gleichspannungswandlers gemäß einer Ausführungsform zugrunde liegt. In Schritt S1 wird zunächst ein Schätzwert U_est für eine Eingangsspannung des Gleichspannungswandlers berechnet. In Schritt S2 kann basierend auf diesem berechneten Schätzwert für die Eingangsspannung eine Regelgröße R für den Gleichspannungswandler berechnet werden. Basierend auf dieser Regelgröße R kann daraufhin der Gleichspannungswandler angesteuert werden.

Zusammenfassend betrifft die vorliegende Erfindung eine Regelung für einen Gleichspannungswandler. Variationen in der eingangsseitigen Spannung des Gleichspannungswandlers werden dadurch kompensiert, dass ein Schätzwert für die Variationen berechnet wird und eine Regelgröße für den Gleichspannungswandler basierend auf dem Schätzwerten der Eingangsspannung bestimmt wird. Die Schätzwerte für die Eingangsspannung können beispielsweise basierend auf einem Polynom, zum Beispiel mittels einer Lagrange-Entwicklung ermittelt werden.

## Patentansprüche

1. Regelvorrichtung für einen Gleichspannungswandler (3), mit:
einer Recheneinrichtung (1), die dazu ausgelegt ist, einen Schätzwert (U_est) für eine Eingangsspannung (U_in) des Gleichspannungswandlers zu berechnen; und
einer Steuereinrichtung (2), die dazu ausgelegt ist, basierend auf dem Schätzwert (U_est) für die Eingangsspannung des Gleichspannungswandlers eine Regelgröße (R) für den Gleichspannungswandler zu ermitteln, wobei die Recheneinrichtung (1) dazu ausgelegt ist, den Schätzwert (U_est) für die Eingangsspannung basierend auf einem Polynom mit einem vorbestimmten Grad und einem vorläufigen Korrekturwert zu berechnen,
**dadurch gekennzeichnet,**
**dass** die Recheneinrichtung (1) dazu ausgelegt ist, in jedem Term des Polynoms einen Wert der Eingangsspannung (U_in) oder einen Wert einer zeitlich verzögerten Eingangsspannung mit einem zuvor ermittelten Polynomkoeffizienten (f0, .., f4) zu multiplizieren und den vorläufigen Korrekturwert hierbei aus der Differenz zwischen der vorgegebenen Eingangsspannung (U_in) und dem vorherigen Schätzwert (U_est_pre) der Eingangsspannung zu ermitteln,
wobei die Recheneinrichtung (1) weiterhin dazu ausgelegt ist, basierend auf Variationen in einer Ausgangsspannung des Gleichspannungswandlers, die Koeffizienten des Polynoms zur Abschätzung der Eingangsspannung zu berechnen, und
bei Feststellen, dass die Ausgangsspannung des Gleichspannungswandlers zumindest annähernd konstant bleibt, das heißt der Betrag der Abweichung der Ausgangsspannung unterhalb einem vorgegebenen Schwellwert bleibt, die ermittelten Koeffizienten für das Polynom zur Abschätzung der Eingangsspannung im weiteren Verlauf konstant zu halten.

2. Regelvorrichtung nach Anspruch 1 die Recheneinrichtung (1) dazu ausgelegt ist, den vorbestimmten Grad des Polynoms in Abhängigkeit von einer elektrischen Belastung des Gleichspannungswandlers (3) einzustellen.

3. Regelvorrichtung nach Anspruch 1 oder 2, wobei die Recheneinrichtung
(1) dazu ausgelegt ist, nach dem Start des Gleichspannungswandlers, die Ausgangsspannung des Gleichspannungswandlers zu analysieren und hierbei Variationen in der Ausgangsspannung zu identifizieren.

4. Regelvorrichtung nach einem der Ansprüche 1 bis 3, wobei der Schätzwert (U_est) für die Eingangsspannung ein Wechselspannungsoffset umfasst.

5. Regelvorrichtung nach Anspruch 4, wobei die Recheneinrichtung (1) dazu ausgelegt ist, eine Amplitude des Wechselspannungsoffsets auf einen vorbestimmten Wert zu begrenzen.

6. Regelvorrichtung nach einem der Ansprüche 1 bis 5, wobei die Regelgröße (R) ein Tastverhältnis für die Ansteuerung von Schaltelementen in dem Gleichspannungswandler umfasst.

7. Gleichspannungswandler zur Konvertierung einer Eingangsspannung in eine Ausgangsspannung mit einer Regelvorrichtung nach einem der Ansprüche 1 bis 6.

8. Verfahren zur Regelung eines Gleichspannungswandlers (3), mit den Schritten:
Berechnen (S1) eines Schätzwertes (U_est) für eine Eingangsspannung
(U_in) des Gleichspannungswandlers (3); und Ermitteln (S2) einer Regelgröße (R) für den Gleichspannungswandler (3) basierend auf dem berechneten Schätzwert (U_est) für die Eingangsspannung,
wobei der Schätzwert (U_est) für die Eingangsspannung basierend auf einem Polynom mit einem vorbestimmten Grad und einem vorläufigen Korrekturwert berechnet wird,
**dadurch gekennzeichnet,**
**dass** in jedem Term des Polynoms ein Wert der Eingangsspannung (U_in) oder ein Wert einer zeitlich verzögerten Eingangsspannung mit
einem zuvor ermittelten Polynomkoeffizienten (f0, .., f4) multipliziert wird und dass sich
der vorläufige Korrekturwert hierbei aus der Differenz zwischen der vorgegebenen Eingangsspannung (U_in) und dem vorherigen Schätzwert (U_est_pre) der Eingangsspannung ergibt,
wobei, basierend auf Variationen in der Ausgangsspannung, die Koeffizienten des Polynoms zur Abschätzung der Eingangsspannung berechnet werden, und
bei Feststellen, dass die Ausgangsspannung des Gleichspannungswandlers zumindest annähernd konstant bleibt, das heißt der Betrag der Abweichung der Ausgangsspannung unterhalb einem vorgegebenen Schwellwert bleibt, die ermittelten Koeffizienten für das Polynom zur Abschätzung der Eingangsspannung im weiteren Verlauf konstant gehalten werden.

## Claims

1. Control apparatus for a DC-to-DC converter (3), having:
a computing device (1) which is designed to calculate an estimated value (U_est) for an input voltage (U_in) of the DC-to-DC converter; and
a control device (2) which is designed to determine a controlled variable (R) for the DC-to-DC converter on the basis of the estimated value (U_est) for the input voltage of the DC-to-DC converter, wherein the computing device (1) is designed to calculate the estimated value (U_est) for the input voltage on the basis of a polynomial with a predetermined degree and a preliminary correction value,
**characterized**
**in that**, in each term of the polynomial, the computing device (1) is designed to multiply a value of the input voltage (U_in) or a value of a temporally delayed input voltage by a previously determined polynomial coefficient (f0, ..., f4) and to determine the preliminary correction value in this case from the difference between the predefined input voltage (U_in) and the previous estimated value (U_est_pre) of the input voltage, wherein the computing device (1) is also designed to calculate the coefficients of the polynomial for estimating the input voltage on the basis of variations in an output voltage of the DC-to-DC converter and, if it is determined that the output voltage of the DC-to-DC converter remains at least approximately constant, that is to say the absolute value of the deviation of the output voltage remains below a predefined threshold value, to then keep the determined coefficients for the polynomial for estimating the input voltage.

2. Control apparatus according to Claim 1, wherein the computing device (1) is designed to set the predetermined degree of the polynomial on the basis of an electrical load of the DC-to-DC converter (3).

3. Control apparatus according to Claim 1 or 2, wherein the computing device (1) is designed to analyse the output voltage of the DC-to-DC converter after the DC-to-DC converter has been started and to identify variations in the output voltage in this case.

4. Control apparatus according to one of Claims 1 to 3, wherein the estimated value (U_est) for the input voltage comprises an AC voltage offset.

5. Control apparatus according to Claim 4, wherein the computing device (1) is designed to limit an amplitude of the AC voltage offset to a predetermined value.

6. Control apparatus according to one of Claims 1 to 5, wherein the controlled variable (R) comprises a duty cycle for controlling switching elements in the DC-to-DC converter.

7. DC-to-DC converter for converting an input voltage into an output voltage, having a control apparatus according to one of Claims 1 to 6.

8. Method for controlling a DC-to-DC converter (3), having the steps of:
calculating (S1) an estimated value (U_est) for an input voltage (U_in) of the DC-to-DC converter (3); and
determining (S2) a controlled variable (R) for the DC-to-DC converter (3) on the basis of the calculated estimated value (U_est) for the input voltage,
wherein the estimated value (U_est) for the input voltage is calculated on the basis of a polynomial with a predetermined degree and a preliminary correction value,
**characterized**
**in that**, in each term of the polynomial, a value of the input voltage (U_in) or a value of a temporally delayed input voltage is multiplied by a previously determined polynomial coefficient (f0, ..., f4), and in that the preliminary correction value results in this case from the difference between the predefined input voltage (U_in) and the previous estimated value (U_est_pre) of the input voltage, wherein the coefficients of the polynomial for estimating the input voltage are calculated on the basis of variations in the output voltage and, if it is determined that the output voltage of the DC-to-DC converter remains at least approximately constant, that is to say the absolute value of the deviation of the output voltage remains below a predefined threshold value, the determined coefficients for the polynomial for estimating the input voltage are then kept constant.

## Revendications

1. Dispositif de régulation pour un convertisseur continu-continu (3), comprenant :
un dispositif de calcul (1) qui est conçu pour calculer une valeur estimée (U_est) pour une tension d'entrée (U_in) du convertisseur continu-continu ; et
un dispositif de commande (2) qui est conçu pour déterminer une grandeur réglée (R) pour le convertisseur continu-continu sur la base de la valeur estimée (U_est) pour la tension d'entrée du convertisseur continu-continu, le dispositif de calcul (1) étant conçu pour calculer la valeur estimée (U_est) pour la tension d'entrée sur la base d'un polynôme d'un degré prédéterminé et d'une valeur de correction provisoire,
**caractérisé en ce que** le dispositif de calcul (1) est conçu pour multiplier dans chaque terme du polynôme une valeur de la tension d'entrée (U_in) ou une valeur d'une tension d'entrée retardée par un coefficient polynomial (f0, ..., f4) déterminé préalablement, et pour déterminer alors la valeur de correction provisoire à partir de la différence entre la tension d'entrée (U_in) prédéfinie et la valeur estimée précédente (U_est_pre) de la tension d'entrée,
le dispositif de calcul (1) étant en outre conçu pour calculer, sur la base de variations d'une tension de sortie du convertisseur continu-continu, les coefficients du polynôme afin d'estimer la tension d'entrée, et
s'il est constaté que la tension de sortie du convertisseur continu-continu reste au moins approximativement constante, c'est-à-dire que le montant de l'écart de la tension de sortie reste au-dessous d'une valeur seuil prédéfinie, pour maintenir constants par la suite les coefficients déterminés pour le polynôme pour l'estimation de la tension d'entrée.

2. Dispositif de régulation selon la revendication 1, dans lequel le dispositif de calcul (1) est conçu pour régler le degré prédéterminé du polynôme en fonction d'une charge électrique du convertisseur continu-continu (3).

3. Dispositif de régulation selon la revendication 1 ou 2, dans lequel le dispositif de calcul (1) est conçu pour analyser après le démarrage du convertisseur continu-continu la tension de sortie du convertisseur continu-continu et pour identifier alors des variations de la tension de sortie.

4. Dispositif de régulation selon l'une quelconque des revendications 1 à 3, dans lequel la valeur estimée (U_est) pour la tension d'entrée comprend un décalage de tension alternative.

5. Dispositif de régulation selon la revendication 4, dans lequel le dispositif de calcul (1) est conçu pour limiter l'amplitude du décalage de tension alternative à une valeur prédéterminée.

6. Dispositif de régulation selon l'une quelconque des revendications 1 à 5, dans lequel la grandeur réglée (R) comprend un rapport cyclique pour le pilotage d'éléments de commutation dans le convertisseur continu-continu.

7. Convertisseur continu-continu destiné à convertir une tension d'entrée en une tension de sortie, comprenant un dispositif régulateur selon l'une quelconque des revendications 1 à 6.

8. Procédé de régulation d'un convertisseur continu-continu (3), comprenant les étapes consistant à :
calculer (S1) une valeur estimée (U_est) pour une tension d'entrée (U_in) du convertisseur continu-continu (3) ; et
déterminer (S2) une grandeur réglée (R) pour le convertisseur continu-continu (3) sur la base de la valeur estimée (U_est) calculée pour la tension d'entrée,
la valeur estimée (U_est) pour la tension d'entrée étant calculée sur la base d'un polynôme d'un degré prédéterminé et d'une valeur de correction provisoire,
**caractérisé en ce que** dans chaque terme du polynôme, une valeur de la tension d'entrée (U_in) ou une valeur d'une tension d'entrée retardée est multipliée par un coefficient polynomial (f0, ..., f4) déterminé préalablement, et **en ce que** la valeur de correction provisoire résulte de la différence entre la tension d'entrée (U_in) prédéfinie et la valeur estimée précédente (U_est_pre) de la tension d'entrée,
dans lequel, sur la base de variations d'une tension de sortie du convertisseur continu-continu, les coefficients du polynôme sont calculés pour estimer la tension d'entrée, et
s'il est constaté que la tension de sortie du convertisseur continu-continu reste au moins approximativement constante, c'est-à-dire que le montant de l'écart de la tension de sortie reste au-dessous d'une valeur seuil prédéfinie, les coefficients déterminés pour le polynôme pour l'estimation de la tension d'entrée sont maintenus constants par la suite.
